## Europäisches Patentamt
## European Patent Office
## Office européen des brevets

(11) Numéro de publication: **0 346 209**
**A1**

## (12) DEMANDE DE BREVET EUROPEEN

(21) Numéro de dépôt: **89401549.4**

(22) Date de dépôt: **05.06.89**

(51) Int. Cl.⁴: **F 16 F 7/12**
**B 60 N 1/00**

(30) Priorité: **06.06.88 FR 8807955**

(43) Date de publication de la demande:
**13.12.89 Bulletin 89/50**

(84) Etats contractants désignés:
**BE DE ES FR GB IT NL**

(71) Demandeur: **Darinot, Jean-Paul**
**Rue de la Vallée**
**Saint Georges-sur-Avron (FR)**

(72) Inventeur: **Darinot, Jean-Paul**
**Rue de la Vallée**
**Saint Georges-sur-Avron (FR)**

(74) Mandataire: **Boivin, Claude**
**9, rue Edouard-Charton**
**F-78000 Versailles (FR)**

(54) **Siège de véhicule à absorbeur de chocs.**

(57) Siège de véhicule dont le bâti (1) est destiné à être ancré à un plancher (2) par au moins un absorbeur de chocs (4).

L'absorbeur de chocs comprend un tube expansible propre à être relié au bâti (1) du siège ou au plancher (2) et dans lequel est emmanchée à force une pièce (9) propre à être reliée au plancher (2) ou au bâti (1), cette pièce (9) ayant une section extérieure supérieure à la section intérieure du tube (5) de sorte que lorsqu'elle se déplace dans le tube dans le sens convenable, elle assure une expansion progressive de ce tube.

FIG.1

## Description

### Siège de véhicule à absorbeur de chocs

La présente invention concerne les sièges de véhicule dont le bâti est ancré au plancher par au moins un dispositif absorbeur de chocs. Lors d'un choc, le siège tend à se déplacer vers l'avant, ce qui entraîne une compression de son ancrage avant et une traction sur son ancrage arrière. L'absorption de cet effort amortit le choc. De tels sièges sont utilisés notamment dans les avions; ils peuvent être utilisés également avec les automobiles.

Le siège selon l'invention est caractérisé en ce que l'absorbeur de chocs comprend un tube expansible propre à être relié au bâti du siège ou au plancher et dans lequel est emmanchée à force une pièce propre à être reliée au plancher ou au bâti, cette pièce ayant une section extérieure supérieure à la section intérieure du tube de sorte que lorsqu'elle se déplace dans le tube dans le sens convenable, elle assure une expansion progressive de ce tube. Lors de l'emmanchement, la pièce a élargi l'extrémité du tube. Lors d'un choc, la pièce se déplace dans le tube en expandant progressivement la paroi de ce tube, ce qui absorbe l'énergie due au choc.

Dans un premier mode de réalisation l'absorbeur comprend un deuxième tube qui est emmanché dans le premier et dans lequel est emmanchée ladite pièce; mais dans un autre mode de réalisation, la pièce est emmanchée directement dans le tube.

L'absorbeur de chocs peut travailler à la traction. Il peut également travailler à la compression; il suffit pour cela que la fixation de la pièce au plancher ou au bâti du siège se fasse du côté opposé à celui vers lequel la pièce peut se déplacer dans le tube.

Les tubes peuvent avoir une section quelconque, par exemple circulaire, ovale ou polygonale.

On a décrit ci-après, à titre d'exemples non limitatifs, trois modes de réalisation du siège selon l'invention, avec référence aux dessins annexés dans lesquels :

La Figure 1 montre schématiquement un siège ancré à un plancher;

La Figure 2 est une vue en coupe de l'absorbeur avant un choc;

La Figure 3 est une vue semblable à la Figure 2 après un choc.

La Figure 4 est une vue en coupe axiale d'un second mode de réalisation de l'amortisseur de chocs;

La Figure 5 est une vue semblable à la Figure 4 d'un troisième mode de réalisation.

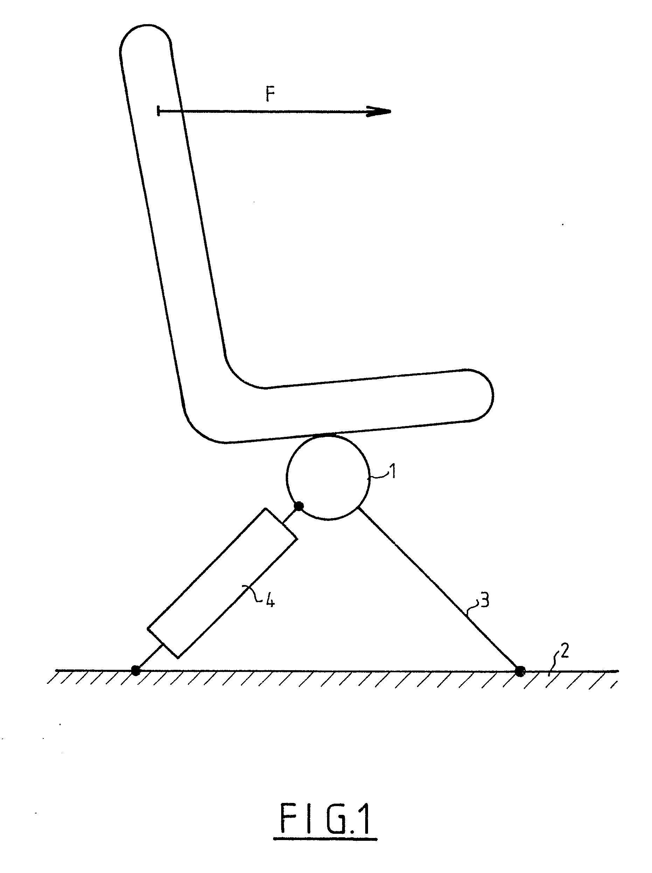

A la Figure 1 on voit un siège dont le bâti 1 est ancré au plancher 2, à l'avant par une liaison 3 et à l'arrière par un absorbeur de chocs désigné dans son ensemble par la référence 4.

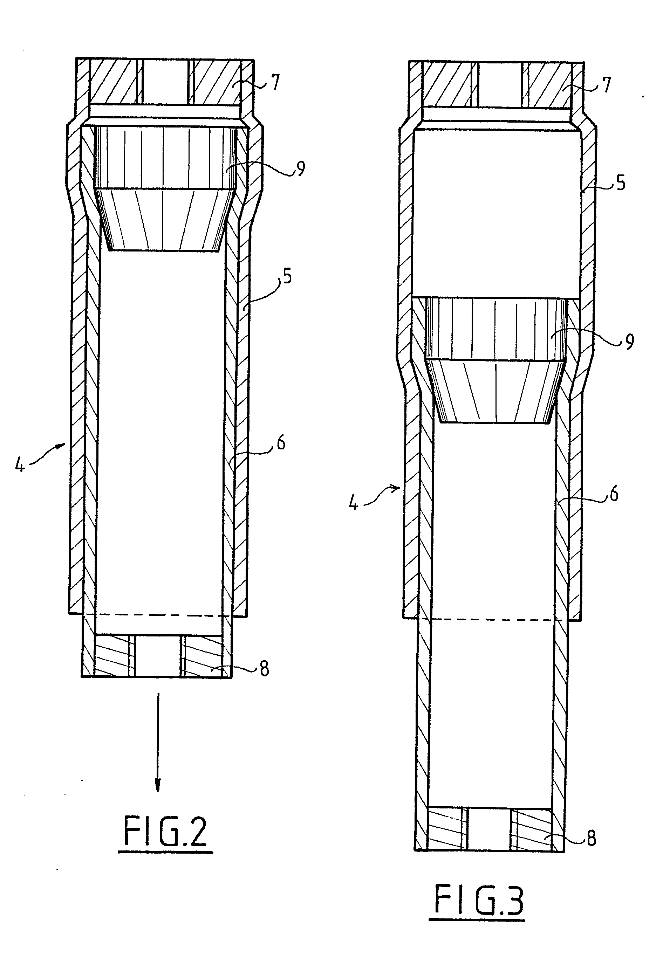

Comme on le voit plus particulièrement à la Figure 2, l'absorbeur de chocs 4 est constitué par deux tubes métalliques 5 et 6 emmanchés l'un dans l'autre de manière à faire saillie l'un par rapport à l'autre; des éléments de fixation 7 et 8 sont solidaires aux extrémités en saillie de ces tubes. Une pièce 9 a été emmanchée à force dans l'extrémité non en saillie du tube intérieur 6, c'est-à-dire à son extrémité opposée à l'élément de fixation 8; cette pièce comprend une partie cylindrique de diamètre supérieur à celui du tube intérieur 6 et une partie tronconique qui se raccorde à la partie cylindrique et dont la partie de plus faible diamètre a un diamètre inférieur à celui du tube 6. Cet emmanchement a entraîné l'élargissement de l'extrémité du tube 6 et une expansion locale du tube 5.

Lors d'un choc, le bâti 1 du siège est soumis du fait de l'inertie à une force F dirigée vers l'avant, ce qui tend à écarter l'une de l'autre l'extrémité de liaison du tube 5 et celle du tube 6. Le tube 5 coulisse dans le tube 6 et, lors de ce mouvement, l'extrémité élargie du tube 6 assure un élargissement progressif du tube 5, comme on le voit à la Figure 3, ce qui absorbe l'énergie du choc.

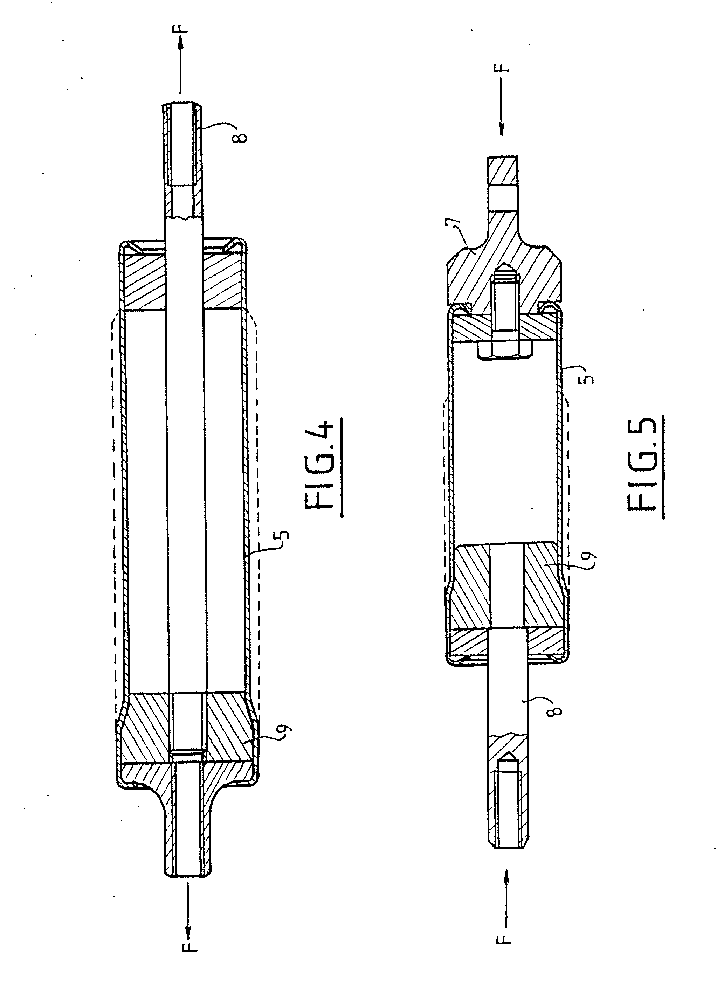

A la Figure 4 on retrouve le tube 5 dont une extrémité est solidaire d'une pièce de fixation 7. Dans l'autre extrémité du tube 5 a été emmanchée à force une pièce 9 comprenant une partie cylindrique de diamètre supérieur au diamètre intérieur du tube 5 et une partie tronconique qui se raccorde à la partie cylindrique et dont la partie de plus faible diamètre a un diamètre sensiblement égal au diamètre intérieur du tube. Cet emmanchement a entraîné un élargissement de l'extrémité du tube 5. Cette pièce 9 est solidaire d'une pièce de fixation 8.

Dans le mode de réalisation de la Figure 4, l'élément de fixation 8 est disposé du côté dans lequel la pièce 9 peut se déplacer dans le tube 5; par contre, dans celui de la Figure 5, l'élément de fixation 8 est disposé du côté opposé.

Quand un effort est exercé entre les deux pièces 7 et 8, comme schématisé par les flèches F (effort de traction à la Figure 4 et de compression à la Figure 5), la pièce 9 coulisse dans le tube 5; lors de ce mouvement, elle assure un élargissement progressif du tube 5, ce qui absorbe l'énergie du choc. On a représenté en traits mixtes la forme du tube 5 après déplacement. L'absorbeur de chocs pourrait être disposé entre le plancher et la partie supérieure du dossier du siège.

## Revendications

1. Siège de véhicule dont le bâti (1) est destiné à être ancré à un plancher (2) par au moins un absorbeur de chocs (4), caractérisé en ce que l'absorbeur de chocs comprend un tube expansible propre à être relié au bâti (1) du siège ou au plancher (2) et dans lequel est emmanchée à force une pièce (9) propre à être reliée au plancher (2) ou au bâti (1), cette pièce (9) ayant une section extérieure supérieure à la section intérieure du tube (5) de sorte que lorsqu'elle se déplace dans le tube dans le sens convenable, elle assure une expansion progressive de ce tube.

2. Siège selon la revendication 1,

caractérisé en ce que l'absorbeur comprend un deuxième tube (6) qui est emmanché dans le tube (5), dans lequel est emmanchée la pièce (9) et qui est propre à être relié au plancher (2) ou au bâti (1).

3. Siège selon la revendication 1, caractérisé en ce que la pièce (9) est emmanchée directement dans le tube.

4. Siège selon l'une des revendications 1 à 3, caractérisé en ce que l'élément de fixation (8) de la pièce (9) au plancher ou au bâti du siège est disposé du côté opposé à celui dans lequel la pièce (9) peut se déplacer dans le tube (5).

5. Siège selon l'une des revendications 1 à 3, caractérisé en ce que l'élément de fixation (8) de la pièce (9) au plancher ou au bâti du siège est disposé du côté dans lequel la pièce (9) peut se déplacer dans le tube (5).

F

1

4

3

2

FIG.1

FIG.2

FIG.3

FIG.4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 078 479 (ENGINEERING PATENTS & EQUIPMENT LTD)<br>* Page 5, ligne 13 - page 6, ligne 10; figures 1,4 *<br>--- | 1,5 | F 16 F 7/12<br>B 60 N 1/00 |
| X | FR-A-2 004 769 (UNIVERSAL OIL PRODUCTS)<br>* Page 7, ligne 14 - page 8, ligne 36; figures 1-3,6,7,9,9A * | 1,2,4 | |
| A | ---  | 3 | |
| Y | FR-A-1 566 533 (PEUGEOT)<br>* Page 2, colonne de gauche, paragraphe 1 - colonne de droite, paragraphe 7; figures 1,2 *<br>--- | 1-3,5 | |
| Y | US-A-3 532 379 (REILLY)<br>* Colonne 4, lignes 10-34; figures 1,6 *<br>--- | 1-3,5 | |
| Y | US-A-3 582 133 (DE LAVENNE)<br>* Colonne 2, lignes 11-26,37-41; colonne 4, lignes 18-29; figures 1,3,7-12 * | 1-3 | DOMAINES TECHNIQUES RECHERCHES (Int. Cl.4) |
| A | ---  | 4,5 | F 16 F<br>B 60 N<br>B 64 D |
| Y | FR-A-2 181 044 (NISSAN)<br>* Figures 1A-20 *<br>--- | 1-3 | |
| A | FR-A-1 197 117 (SUD AVIATION)<br>--- | | |
| A | US-A-2 682 931 (YOUNG)<br>----- | | |

Le présent rapport a été établi pour toutes les revendications

| Lieu de la recherche | Date d'achèvement de la recherche | Examinateur |
|---|---|---|
| LA HAYE | 17-07-1989 | ESPEEL R.P. |